(19) Europäisches Patentamt
European Patent Office
Office européen des brevets

(11) **EP 3 086 898 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **14812549.5**

(22) Anmeldetag: **16.12.2014**

(51) Int Cl.:
**B23K 26/08** *(2014.01)* **B23K 26/24** *(2014.01)*
**B23K 26/06** *(2014.01)*

(86) Internationale Anmeldenummer:
**PCT/EP2014/078099**

(87) Internationale Veröffentlichungsnummer:
**WO 2015/097027 (02.07.2015 Gazette 2015/26)**

(54) **SCHWEISSROBOTER UND VERFAHREN ZUM BETREIBEN EINER LASERSCHWEISSVORRICHTUNG**

WELDING ROBOT AND METHOD FOR OPERATING A LASER WELDING DEVICE

ROBOT DE SOUDAGE ET PROCÉDÉ DE COMMANDE D'UN DISPOSITIF DE SOUDAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2013 DE 102013227148**

(43) Veröffentlichungstag der Anmeldung:
**02.11.2016 Patentblatt 2016/44**

(73) Patentinhaber: **KUKA Deutschland GmbH**
**86165 Augsburg (DE)**

(72) Erfinder: **DINKHOFF, Markus**
**48607 Ochtrup (DE)**

(74) Vertreter: **Böss, Dieter Alexander et al**
**Schirmgasse 268**
**84028 Landshut (DE)**

(56) Entgegenhaltungen:
**WO-A1-2007/036797    WO-A2-2004/004958**
**JP-A- H08 257 775    US-A1- 2002 195 432**

• **DATABASE WPI Week 201170 Thomson Scientific, London, GB; AN 2011-N02101 XP002739323, -& JP 2011 206821 A (MITSUBISHI ELECTRIC CORP) 20. Oktober 2011 (2011-10-20)**

**Beschreibung**

Die Erfindung betrifft einen Schweißroboter und ein Verfahren zum Betreiben einer Laserschweißvorrichtung.

Die DE 103 44 526 A1 offenbart einen Schweißroboter mit einem Industrieroboter und einer Laserschweißvorrichtung. Ein Laserschweißkopf der Laserschweißvorrichtung wird mittels eines Roboterarms des Industrieroboters bewegt. Der Laserschweißkopf erzeugt einen Laserstrahl, der vorgesehen ist, ein Werkstück mit einer Schweißnaht zu versehen.

Die JP 2011 206821 A beschreibt eine Vorrichtung mit einer Einrichtungseinheit, welche die Prozesszustände eines Laserschweißverfahrens zum Zeitpunkt des Beginns des Laserschweißverfahrens festsetzt. Über Schaltausgänge wird nach dem Beginn Laserstrahlleistung rampenförmig erhöht bis zu einer konstanten Maximalleistung und bei Annäherung an einen Endpunkt der Schweißnaht die Laserstrahlleistung rampenförmig verringert. Die Steuerung der Laserstrahlleistung erfolgt hierbei auf Basis von vier definierten Punkten auf der Schweißbahn.

Die WO 2004/004958 A2 beschreibt ein Verfahren für fehlerfreies Laserschweißen im Start-Stopp-Bereich, wobei zur Führung des Laserstrahles im Start-und Stoppbereich durch eine Kombination von Maßnahmen die Streckenenergie des Laserstrahles in diesem Bereich optimal gesteuert wird. Dazu wird im Startbereich der Schweißnaht die Leistung des Laserstrahles vom Startpunkt über eine Länge auf volle Strahlleistung linear gesteigert.

Die WO 2007/036797 A1 beschreibt ein Verfahren zum Laserschweißen, mit den Schritten des Beginnens des Erhöhens der Laserausgangsstärke des Laseroszillators während einer vorgeschriebenen Zeitdauer, bevor die Laserbestrahlungsposition einen Schweißstartpunkt erreicht, um eine erforderliche Stärke durch die Zeit zu erreichen bis die Bestrahlungsposition an den Schweißstartpunkt erreicht, und des Beginnens des Ausrichtens des Brennpunkts in Bezug auf die Schweißoberfläche am Schweißstartpunkt unmittelbar bevor die Laserbestrahlungsposition den Schweißstartpunkt erreicht.

Die Aufgabe der Erfindung ist es, ein verbessertes Verfahren zum Betreiben einer Laserschweißvorrichtung anzugeben.

Die Aufgabe der Erfindung wird gelöst durch ein Verfahren zum Betreiben einer zum Versehen eines Werkstücks mit einer Schweißnaht vorgesehenen Laserschweißvorrichtung, aufweisend folgende Verfahrensschritte:

- automatisches Bewegen einer Vorrichtung zum Erzeugen eines zum Schweißen vorgesehenen Laserstrahls der Laserschweißvorrichtung mittels einer mechanischen Vorrichtung, welche durch eine Steuervorrichtung angesteuert wird, an eine erste Position, die dem Anfang der zu erzeugenden Schweißnaht zugeordnet ist, um das Schweißen der Schweißnaht zu beginnen,
- während des Schweißens der Schweißnaht, automatisches Bewegen der Vorrichtung zum Erzeugen eines zum Schweißen vorgesehenen Laserstrahls mittels der mechanischen Vorrichtung von der ersten Position zu einer zweiten Position, die dem Ende der zu erzeugenden Schweißnaht zugeordnet ist, mit einer konstanten, aktuellen Geschwindigkeit $v$, welche die Vorrichtung zum Erzeugen eines zum Schweißen vorgesehenen Laserstrahls beim Erreichen der ersten Position aufweist,
- aufgrund der konstanten, aktuellen Geschwindigkeit $v$ und einer Länge einer vorgegebenen ersten Strecke, die von der ersten Position beginnt, Berechnen einer ersten Zeitdauer $t_1$, innerhalb der die Vorrichtung zum Erzeugen eines zum Schweißen vorgesehenen Laserstrahls entlang der ersten Strecke bewegt wird, und
- beginnend von der ersten Position, zeitgesteuertes rampenförmiges Erhöhen einer von der Vorrichtung zum Erzeugen eines zum Schweißen vorgesehenen Laserstrahls zu erzeugenden Schweißleistung, sodass diese am Ende der ersten Zeitdauer $t_1$ eine vorgegebene oder vorgebbare Soll-Schweißleistung $P_{Soll}$ für das Schweißen der Schweißnaht aufweist.

Gemäß dem erfindungsgemäßen Verfahren wird die Vorrichtung zum Erzeugen eines zum Schweißen vorgesehenen Laserstrahls der Laserschweißvorrichtung an die erste Position automatisch heran bewegt. Die erste Position ist dem Anfang der zu erzeugenden Schweißnaht zugeordnet, d.h. an der ersten Position soll die Vorrichtung zum Erzeugen eines zum Schweißen vorgesehenen Laserstrahls beginnen, das Werkstück mit der Schweißnaht zu versehen. Die Vorrichtung zum Erzeugen eines zum Schweißen vorgesehenen Laserstrahls ist z.B. ein Laserschweißkopf.

Des Weiteren wird die Vorrichtung zum Erzeugen eines zum Schweißen vorgesehenen Laserstrahls mittels der mechanischen Vorrichtung, gesteuert durch ihre Steuervorrichtung, automatisch bewegt. Die mechanische Vorrichtung ist vorzugsweise als ein Roboterarm eines Industrieroboters ausgeführt. In diesem Fall ist die Steuervorrichtung als eine Robotersteuervorrichtung zum Ansteuern des Roboterarms ausgebildet.

Ein weiterer Aspekt der Erfindung betrifft demnach einen Schweißroboter zum Durchführen des erfindungsgemäßen Verfahrens nach Anspruch 11. Der erfindungsgemäße Schweißroboter umfasst einen Industrieroboter, der einen Roboterarm und eine zum Ansteuern des Roboterarms vorgesehene Robotersteuervorrichtung umfasst, und eine Laserschweißvorrichtung, die eine Vorrichtung zum Erzeugen eines zum Schweißen vorgesehenen Laserstrahls und eine Schweißsteuervorrichtung zum Ansteuern der Vorrichtung zum Erzeugen eines zum Schweißen vorgesehenen Laserstrahls umfasst. Der Schweißroboter kann derart ausgeführt sein, dass die Robotersteuervorrichtung auch die Vorrichtung zum Erzeugen eines zum Schweißen vorgesehenen Laserstrahls ansteuert. Die Laserschweißvorrichtung umfasst vorzugsweise eine eigene Laserschweißsteuervorrichtung, welche mit der Robotersteuervorrichtung kommuniziert und die Vorrichtung zum Erzeugen eines zum Schweißen vorgesehenen Laserstrahls ansteuert, insbesondere deren Schweißleistung regelt.

Industrieroboter im Allgemeinen sind Handhabungsmaschinen, die zur selbsttätigen Handhabung von Objekten mit zweckdienlichen Werkzeugen ausgerüstet und bezüglich mehrerer Bewegungsachsen, insbesondere hinsichtlich Orientierung, Position und Arbeitsablauf programmierbar sind. Industrieroboter umfassen im Allgemeinen den Roboterarm und die Robotersteuervorrichtung. Am Roboterarm kann ein Endeffektor befestigt werden. Dieser ist im Falle des erfindungsgemäßen Schweißroboters als die Vorrichtung zum Erzeugen eines zum Schweißen vorgesehenen Laserstrahls ausgebildet. Der Roboterarm stellt im Wesentlichen den beweglichen Teil des Industrieroboters dar und weist mehrere, über Gelenke verbundene Hebel auf, die zum Beispiel mittels elektrischer Antriebe von der Robotersteuervorrichtung für die Bewegung des Roboterarms angesteuert werden, damit beispielsweise der Tool Center Point bzw. die Vorrichtung zum Erzeugen eines zum Schweißen vorgesehenen Laserstrahls des Schweißroboters auf einer vorbestimmten Bahn bewegt wird.

Gemäß dem erfindungsgemäßen Verfahrens wird während des Schweißens der Schweißnaht die Vorrichtung zum Erzeugen eines zum Schweißen vorgesehenen Laserstrahls mittels der mechanischen Vorrichtung von der ersten Position zu einer zweiten Position bewegt, die dem Ende der zu erzeugenden Schweißnaht zugeordnet ist. Außerdem wird die Vorrichtung zum Erzeugen eines zum Schweißen vorgesehenen Laserstrahls mit der aktuellen Geschwindigkeit $v$, welche die Vorrichtung zum Erzeugen eines zum Schweißen vorgesehenen Laserstrahls beim Erreichen der ersten Position aufweist, bewegt, also während des Schweißens mit konstanter Geschwindigkeit bewegt.

Um das Schweißergebnis zu verbessern, wird das Schweißen nicht mit der vollen Schweißleistung begonnen, sondern rampenförmig entlang der ersten Strecke erhöht. Da die Vorrichtung zum Erzeugen eines zum Schweißen vorgesehenen Laserstrahls für verschieden Werkstücke nicht stets mit derselben Geschwindigkeit die erste Position erreicht, wird erfindungsgemäß aufgrund der aktuellen Geschwindigkeit $v$ und der Länge der vorgegebenen ersten Strecke die erste Zeitdauer $t_1$ berechnet, innerhalb der die Vorrichtung zum Erzeugen eines zum Schweißen vorgesehenen Laserstrahls entlang der ersten Strecke bewegt wird. Dies erfolgt z.B. gemäß folgender Gleichung:

$$t_1 = S2/v$$

wobei S2 die Länge der ersten Strecke ist, die wesentlich kürzer als die Strecke zwischen der ersten der zweiten Position ist.

Da nun die erstes Zeitdauer bekannt ist, kann, beginnend von der ersten Position die von der Vorrichtung zum Erzeugen eines zum Schweißen vorgesehenen Laserstrahls zu erzeugende Schweißleistung derart zeitgesteuert rampenförmig erhöht werden, sodass diese am Ende der ersten Zeitdauer die vorgegebene oder vorgebbare Soll-Schweißleistung $P_{Soll}$ für das Schweißen der Schweißnaht aufweist.

Nach einer Variante des erfindungsgemäßen Verfahrens wird die erste Zeitdauer mittels der Steuervorrichtung berechnet. Dann kann an dem Zeitpunkt, an dem die Vorrichtung zum Erzeugen eines zum Schweißen vorgesehenen Laserstrahls die erste Position erreicht, eine Information über die erste Zeitdauer an eine Schweißsteuervorrichtung der Laserschweißvorrichtung übergeben werden, so dass diese die Vorrichtung zum Erzeugen eines zum Schweißen vorgesehenen Laserstrahls basierend auf der erste Zeitdauer zeitgesteuert anzusteuern vermag. Somit steuert die Schweißvorrichtung die Vorrichtung zum Erzeugen eines zum Schweißen vorgesehenen Laserstrahls derart an, dass sich während der ersten Zeitdauer, welche von der Steuervorrichtung berechnet wurde, rampenförmig erhöht. Die vorgegebene oder vorgebbare Soll-Schweißleistung $P_{Soll}$ kann z.B. ebenfalls der Schweißsteuervorrichtung von der Steuervorrichtung übergeben werden. Die vorgegebene oder vorgebbare Soll-Schweißleistung $P_{Soll}$ kann aber schon fest in der Schweißsteuervorrichtung hinterlegt sein.

Die erste Zeitdauer, kann z.B. dann berechnet werden, wenn die Vorrichtung zum Erzeugen eines zum Schweißen vorgesehenen Laserstrahls die erste Position erreicht. Diese Variante bietet sich dann an, wenn die Berechnung der ersten Zeitdauer mit vernachlässigbarer Geschwindigkeit erfolgt.

Das Berechnen der ersten Zeitdauer kann aber auch erfolgen, bevor die Vorrichtung zum Erzeugen eines zum Schweißen vorgesehenen Laserstrahls die erste Position erreicht.

Nach einer weiteren Ausführungsform des erfindungsgemäßen Verfahrens kann der Schritt des zeitgesteuerten rampenförmigen Erhöhens der von der Vorrichtung zum Erzeugen eines zum Schweißen vorgesehenen Laserstrahls zu erzeugenden Schweißleistung $P$ durch treppenförmiges Erhöhen von Soll-Werten für die Schweißleistung $P$ während der ersten Zeitdauer $t_1$ erfolgen. Dies wird vorzugsweise derart durchgeführt:
Ermitteln aus der ersten Zeitdauer und einer Zykluszeit $T_{zykl}$ der Steuervorrichtung einer Anzahl $n$ von einzelnen Stufen, mit der die Soll-Werte der Schweißleistung $P$ innerhalb der ersten Zeitdauer $t_1$ des treppenförmigen Erhöhens der Schweißleistung steigen, insbesondere gemäß folgender Gleichung:

$$n \ = \ t_1/T_{zykl}$$

Dies wird mittels der Steuervorrichtung, gegebenenfalls mittels der Robotersteuervorrichtung durchgeführt.

Anschließend wird insbesondere mittels der Steuervorrichtung eine Differenzleistung $P_{step}$ gemäß folgender Gleichung berechnet.

$$P_{step} \ = \ (P_{Soll} \ - \ P_{min})/n$$

wobei $P_{min}$ die Schweißleistung an der ersten Position ist. $P_{min}$ ist vorzugsweise Null. Somit ist es möglich, die Schweißsteuervorrichtung mittels der Steuervorrichtung in diskreten Schritten derart anzusteuern, dass diese anwachsende Soll-Werte für die Schweißleistung erhält, sodass die Soll-Werte für die Schweißleistung um die Differenzleistung $P_{step}$ treppenförmig innerhalb der ersten Zeitdauer erhöht werden.

Um das Schweißergebnis zu verbessern, werden gemäß einer weiteren Variante des erfindungsgemäßen Verfahrens zusätzlich folgende Verfahrensschritte durchgeführt:

- aufgrund der aktuellen Geschwindigkeit $v$ und einer Länge einer vorgegebenen zweiten Strecke, die vor der zweiten Position beginnt und dort endet, Berechnen einer zweiten Zeitdauer $t_2$, innerhalb der die Vorrichtung zum Erzeugen eines zum Schweißen vorgesehenen Laserstrahls entlang der zweiten Strecke bewegt wird, und
- wenn die Vorrichtung zum Erzeugen eines zum Schweißen vorgesehenen Laserstrahls eine dritte Position erreicht, die dem Anfang der zweiten Strecke zugeordnet ist, zeitgesteuertes rampenförmiges Verringern der von der Vorrichtung zum Erzeugen eines zum Schweißen vorgesehenen Laserstrahls zu erzeugenden Schweißleistung, sodass diese am Ende der zweiten Zeitdauer $t_2$ eine Schweißleistung $P_{min,2}$ aufweist, welche wesentlich geringer als die Soll-Schweißleistung $P_{Soll}$ ist.

Somit wird gemäß dieser Variante nicht nur der Schweißleistung am Anfang der Schweißnaht rampenförmig entlang einer vorgegeben Strecke erhöht, sondern am Ende auch rampenförmig verringert.

Die zweite Zeitdauer kann mittels der Steuervorrichtung berechnet und eine Information über die zweite Zeitdauer an die Schweißsteuervorrichtung übergeben werden, wenn die Vorrichtung zum Erzeugen eines zum Schweißen vorgesehenen Laserstrahls die dritte Position erreicht, so dass diese die Vorrichtung zum Erzeugen eines zum Schweißen vorgesehenen Laserstrahls basierend auf der zweiten Zeitdauer zeitgesteuert anzusteuern vermag.

Die zweite Zeitdauer kann berechnet werden, wenn die Vorrichtung zum Erzeugen eines zum Schweißen vorgesehenen Laserstrahls die dritte Position erreicht. Die zweite Zeitdauer kann aber auch davor berechnet werden.

Nach einer Ausführungsform des erfindungsgemäßen Verfahrens kann der Schritt des zeitgesteuerten rampenförmigen Verringerns der von der Vorrichtung zum Erzeugen eines zum Schweißen vorgesehenen Laserstrahls zu erzeugenden Schweißleistung durch treppenförmiges Verringern von Soll-Werten für die Schweißleistung während der zweiten Zeitdauer erfolgt. Dies erfolgt insbesondere gemäß folgender Verfahrensschritte:

- Ermitteln aus der zweiten Zeitdauer und einer Zykluszeit $T_{zykl}$ der Steuervorrichtung einer Anzahl $m$ von einzelnen Stufen, mit der die Soll-Werte der Schweißleistung $P$ innerhalb der zweiten Zeitdauer des treppenförmigen Verringerns der Schweißleistung verringert werden soll, insbesondere gemäß folgender Gleichung:

$$m \ = \ t_2/T_{zykl}$$

- Berechnen einer weiteren Differenzleistung $P_{step,2}$ gemäß folgender Gleichung

$$P_{step,2} \ = \ (P_{Soll} \ - \ P_{min,2})/m$$

wobei $P_{min,2}$ die Schweißleistung an der zweiten Position ist, und

- treppenförmiges Verringern der Soll-Werte für die Schweißleistung um die weitere Differenzleistung $P_{step,2}$.

Ausführungsbeispiele der Erfindung sind exemplarisch in den beigefügten schematischen Zeichnungen dargestellt. Es zeigen:

Fig. 1    einen Schweißroboter mit einem Industrieroboter und einer Laserschweißvorrichtung,

Fig. 2    eine Draufsicht eines mit einer Schweißnaht zu versehenen Werkstücks und den Verlauf der von der Schweißvorrichtung aufzubringenden Schweißleistung,

Fig. 3    ein Flussdiagramm zum Veranschaulichen des Betriebs des Schweißroboters, und

Fig. 4    ein weiteres Flussdiagramm.

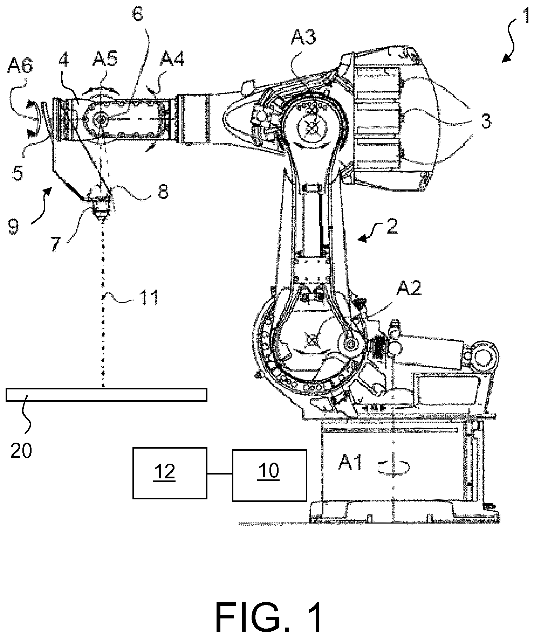

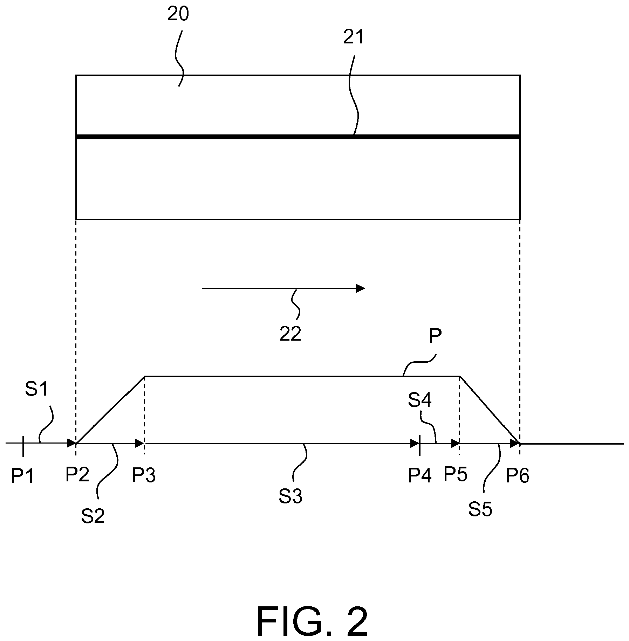

Die Fig. 1 zeigt einen Schweißroboter als Beispiel einer Laserschweißvorrichtungsanordnung. Der Schweißroboter umfasst einen Industrieroboter 1 mit einer Kinematik für Bewegungen in beispielsweise sechs Freiheitsgraden. Der Industrieroboter 1 weist in allgemein bekannter Weise einen Roboterarm 2 mit Gelenken, Hebeln, insbesondere sechs Achsen A1 bis A6 und einer Roboterhand 4 auf, an deren Ende eine als Flansch 5 ausgeführte Befestigungsvorrichtung angeordnet ist.
Im Falle des vorliegenden Ausführungsbeispiels umfasst der Schweißroboter 1 eine Laserschweißvorrichtung 9, die einen allgemein bekannten Laserschweißkopf 7 aufweist. Der Laserschweißkopf 7 ist am Flansch 5 des Roboterarms 2 befestigt und umfasst eine Fokussieroptik 8, von der ein Laserstrahl 11 ausgeht, mittels dem ein Werkstück 20 mit einer Schweißnaht 21 versehen werden kann. Eine Draufsicht des Werkstücks 20 mit der Schweißnaht 21 ist in der Fig. 2 gezeigt. Das Werkstück 20 umfasst z.B. zwei Teilwerkstücke, die mittels der Schweißnaht 21 zusammengeschweißt werden sollen.
Des Weiteren wird jedoch der Hebel relativ zu seiner Achse A1 bis A6 von einem Antrieb bewegt, die beispielsweise jeweils einen elektrischen Motor 3 und Getriebe aufweisen, wie es dem Fachmann allgemein bekannt ist. Der Industrieroboter 1 weist ferner eine Robotersteuervorrichtung 10 auf, die im Falle des vorliegenden Ausführungsbeispiels als ein Steuerrechner ausgebildet und mit den Antrieben des Industrieroboters 1 in nicht dargestellter Weise verbunden ist und diese mittels eines auf der Robotersteuervorrichtung 10 laufenden Rechnerprogramms ansteuert, so dass der Roboterarm 2 den Laserschweißkopf 7 auf einer gewünschten Bahn bewegt. Die Antriebe des Industrieroboters 1 sind insbesondere elektrische Antriebe bzw. geregelte elektrische Antriebe. Der Roboterarm 2 stellt allgemein eine mechanische Vorrichtung zum Bewegen des Laserschweißkopfes 7 dar, welcher mittels der Robotersteuervorrichtung 10 angesteuert wird.
Die Robotersteuervorrichtung 10 kann auch eingerichtet sein, die Laserschweißvorrichtung 9 anzusteuern, insbesondere derart, dass sie die Leistung von dem von der Laserschweißvorrichtung 9 erzeugten und zum Schweißen vorgesehenen Laserstrahls 11 steuert, gegebenenfalls auch regelt.
Im Falle des vorliegenden Ausführungsbeispiels umfasst jedoch die Schweißvorrichtung 9 eine eigene Schweißsteuervorrichtung 12, welche mit der Robotersteuervorrichtung 10 kommuniziert. Die Schweißsteuervorrichtung 12 ist insbesondere derart eingerichtet, den Laserschweißkopf 7 derart anzusteuern, dass dieser eine vorgegebene Schweißleistung P zum Schweißen der Schweißnaht 21 erzeugt. Der Verlauf dieser Schweißleistung P entlang der Schweißnaht 21 ist ortsabhängig und in der Fig. 2 gezeigt. Gegebenenfalls regelt die Lasersteuervorrichtung 12 die Schweißleistung.

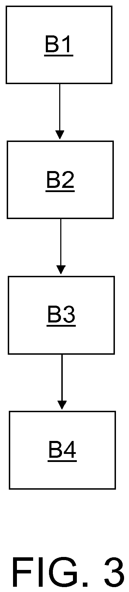

Die Fig. 3 zeigt ein Flussdiagramm, welches den Betrieb des Schweißroboters veranschaulicht.
Zunächst bewegt der Roboterarm 2, gesteuert durch seine Robotersteuervorrichtung 10, den Laserschweißkopf 7 an eine erste Position P2 relativ zum Werkstück 21, welche dem Anfang der zu erzeugenden Schweißnaht 21 zugeordnet ist, Schritt B1 des in der Fig. 3 gezeigten Flussdiagramms.
Anschließend bewegt der Industrieroboter 1 mittels seines Roboterarms 2 und gesteuert durch die Robotersteuervorrichtung 10 den Laserschweißkopf 7 in Richtung eines Pfeils 22 mit konstanter Geschwindigkeit v zu einer zweiten Position P6 relativ zum Werkstück 21, welche dem Ende der zu erzeugenden Schweißnaht 21 zugeordnet ist, Schritt B2 des in der Fig. 3 gezeigten Flussdiagramms. Die Geschwindigkeit v ist dabei gleich der aktuellen Geschwindigkeit, mit der die Schweißvorrichtung 9 die erste Position P2 erreicht. Während dieser Bewegung wird das Werkstück 20 mit der Schweißnaht 21 versehen.
Bis der Laserschweißkopf 7 die dem Anfang der zu erzeugenden Schweißnaht 21 zugeordnete erste Position P2 erreicht, ist der Laserschweißkopf 7 ausgeschaltet bzw. wird, gesteuert durch die Schweißsteuervorrichtung 12 mit sehr geringer Schweißleistung P vorzugsweise nahe Null Watt bzw. mit gar keiner Schweißleistung betrieben.
Wenn der Laserschweißkopf 7 die dem Anfang der zu erzeugenden Schweißnaht 21 zugeordnete erste Position P2 erreicht, dann wird die Schweißleistung P des Laserschweißkopfes 7, gesteuert durch die Schweißsteuervorrichtung 12, rampenförmig erhöht, sodass sie an einer Position P3 relativ zur Schweißnaht 21 eine vorgegebene Leistung $P_{soll}$ erreicht, Schritt B3 des in der Fig. 3 gezeigten Flussdiagramms. Die Schweißleistung P wird beispielsweise kontinuierlich erhöht. Die Position P3 relativ zur Schweißnaht 21 ist vorgegeben, sodass der Laserschweißkopf 7 zwischen dieser Position P3 und der dem Anfang der zu erzeugenden Schweißnaht 21 zugeordneten ersten Position P2 eine vorgegebene erste Strecke S2 zurück legt.

Im Falle des vorliegenden Ausführungsbeispiels ist die Schweißsteuervorrichtung 12 der Schweißvorrichtung 9 derart ausgeführt, dass sie aufgrund einer ersten Zeitdauer $t_1$, innerhalb der der Roboterarm 2 den Laserschweißkopf 7 von der dem Anfang der zu erzeugenden Schweißnaht 21 zugeordneten ersten Position P2 zur Position P3 bewegt, an der der Laserschweißkopf 7 die vorgegebene Schweißleistung $P_{soll}$ erreichen soll, rampenförmig erhöht. Dazu benötigt die Schweißsteuervorrichtung 12 eine Information über die erste Zeitdauer $t_1$ und wann diese beginnt. Außerdem benötigt die Schweißsteuervorrichtung 9 eine Information über die vorgegebene Schweißleistung $P_{soll}$. Die vorgegebene Schweißleistung $P_{soll}$ kann z.B. fest vorgegeben sein, insbesondere fest in der Schweißsteuervorrichtung 9 hinterlegt sein, oder z.B. auch der Schweißsteuervorrichtung 9 von der Robotersteuervorrichtung 10 übermittelt werden, insbesondere dann, wenn der Laserschweißkopf 7 die dem Anfang der zu erzeugenden Schweißnaht 21 zugeordnete Position erste P2 erreicht.

Da der Robotersteuervorrichtung 10 die Länge der ersten Strecke S2 und die Geschwindigkeit $v$ bekannt ist, mit der der Laserschweißkopf 7 aktuell entlang der zu schweißenden Schweißnaht 21 bewegt wird, ist es der Robotersteuervorrichtung 10 möglich, die erste Zeitdauer $t_1$, innerhalb der der Roboterarm 2 den Laserschweißkopf 7 von erster Position P2 zur Position P3 bewegt, gemäß folgender Formel zu berechnen.

$$t_1 = S2/v$$

Wenn der Laserschweißkopf 7 die erste Position P2 erreicht, dann übergibt die Robotersteuervorrichtung 10 der Schweißsteuervorrichtung 12 eine Information über die erste Zeitdauer $t_1$.

Erreicht im Falle des vorliegenden Ausführungsbeispiels der Laserschweißkopf 7 während des Schweißens der Schweißnaht 21 eine Position P5 relativ zum Werkstück 20, die vor der zweiten Position P6 liegt, welche dem Ende der zu erzeugenden Schweißnaht 21 zugeordnet ist, dann wird die Schweißleistung P des Laserschweißkopfes 7, gesteuert durch die Schweißsteuervorrichtung 12 rampenförmig, insbesondere kontinuierlich, verringert, bis sie an der dem Ende der zu erzeugenden Schweißnaht 21 zugeordneten zweiten Position P6 eine sehr geringe Schweißleistung P, vorzugsweise nahe Null Watt, oder gar keine Schweißleistung, erzeugt, Schritt B4 des in der Fig. 3 gezeigten Flussdiagramms. Danach ist der Schweißvorgang beendet und das Werkstück 20 mit der Schweißnaht 21 versehen.

Im Falle des vorliegenden Ausführungsbeispiels ist die Schweißsteuervorrichtung 12 der Schweißvorrichtung 9 derart ausgeführt, dass sie aufgrund einer zweiten Zeitdauer $t_2$, innerhalb der der Roboterarm 2 den Laserschweißkopf 7 von der Position P5 bis zu dem dem Ende der Schweißnaht 21 zugeordneten zweiten Position P6 bewegt, rampenförmig zu verringern. Dazu benötigt die Schweißsteuervorrichtung 12 eine Information über die zweite Zeitdauer $t_2$ und wann diese beginnt.

Da der Robotersteuerungsvorrichtung 10 die Länge der zweiten Strecke S5 zwischen den Positionen P5 und P6 und die Geschwindigkeit $v$ bekannt ist, mit der der Laserschweißkopf 7 aktuell entlang der zu schweißenden Schweißnaht 21 bewegt wird, ist es der Robotersteuervorrichtung 10 möglich, die zweite Zeitdauer $t_2$, innerhalb der der Roboterarm 2 den Laserschweißkopf 7 von der Position P5 bis zu dem dem Ende der Schweißnaht 21 zugeordneten zweiten Position P6 bewegt, gemäß folgender Formel zu berechnen.

$$t_2 = S5/v$$

Wenn der Laserschweißkopf 7 die Position P5 erreicht, an der er die Schweißleistung P verringern soll, dann übergibt die Robotersteuervorrichtung 10 der Schweißsteuervorrichtung 12 eine Information über die zweite Zeitdauer $t_2$.

Im obenstehend beschriebenen Ausführungsbeispiel werden die beiden Zeitdauern $t_1$, $t_2$ von der Robotersteuervorrichtung 10 berechnet und dann an die Schweißsteuervorrichtung 12 der Schweißvorrichtung 9 übermittelt, wenn der Laserschweißkopf 7 die Position P2 bzw. P5 erreicht.

Im Falle des vorliegenden Ausführungsbeispiels können die beiden Zeitdauern $t_1$, $t_2$ mittels eines Unterprogramms oder einer Funktion berechnet werden, welches bzw. welche Teil eines auf der Robotersteuervorrichtung 10 laufenden Rechnerprogramms ist, welches z.B. auch zum Ansteuern des Roboterarms 2 vorgesehen sein kann.

Falls die Laufzeit dieser durch eine Bahnschaltfunktion des auf der Robotersteuervorrichtung 10 laufenden Rechnerprogramms aufgerufenen Funktion bzw. die Laufzeit des durch die Bahnschaltfunktion aufgerufenen Unterprogramms für den Betrieb des Schweißroboters 1 vernachlässigt werden kann, wird die erste Zeitdauer $t_1$ beim Erreichen der ersten Position P2 berechnet und an die Schweißsteuervorrichtung 12 übermittelt, also zum Zeitpunkt, an dem der Laserschweißkopf 7 die dem Anfang der zu erzeugenden Schweißnaht 21 zugeordnete erste Position P2 erreicht. In diesem Fall wird die zweite Zeitdauer $t_2$ beim Erreichen der Position P5 berechnet und an die Schweißsteuervorrichtung 12 übermittelt, also zum Zeitpunkt, an den der Laserschweißkopf 7 die Position P5 erreicht, an der die Schweißleistung P rampenförmig abfallen soll.

Sollte die Laufzeit der durch die Bahnschaltfunktion aufgerufenen Funktion nicht vernachlässigbar klein sein, dann kann es im Falle des vorliegenden Ausführungsbeispiels vorgesehen sein, die Funktion bzw. das Unterprogramm zum Berechnen der ersten Zeitdauer $t_1$ vor dem Erreichen der ersten Position P2 zu berechnen und eine Information über die berechnete erste Zeitdauer $t_1$ beim Erreichen der ersten Position P2 an die Schweißsteuervorrichtung 12 zu übermitteln. Die Bahnschaltfunktion, die das Unterprogramm zur Berechnung und Weitergabe der ersten Zeitdauer $t_1$ aufruft, wird insbesondere zeitlich soweit vor dem Erreichen der ersten Position P2 aufgerufen, dass alle Werte beim Erreichen der ersten Position P2 sicher zur Verfügung stehen. Beim Erreichen der ersten Position P2 wird insbesondere durch Setzten eines Ausgang der Schweißsteuervorrichtung 12 durch ein auf der Schweißsteuervorrichtung 12 laufenden Rechnerprogramms die rampenförmige Erhöhung der Schweißleistung P gestartet, also die Schweißleistung P des Laserschweißkopfes 7 erhöht. Beim Erreichen der Soll-Schweißleistung $P_{Soll}$ wird dieser Ausgang wieder zurückgesetzt. Insbesondere wird die Funktion bzw. das Unterprogramm zum Berechnen der ersten Zeitdauer $t_1$ dann aufgerufen, wenn der Laserschweißkopf 7 eine Position P1 erreicht, sodass der Laserschweißkopf 7 noch eine Strecke S1 zurück legen muss, um die dem Anfang der zu erzeugenden Schweißnaht 21 zugeordnete erste Position P2 zu erreichen. In diesem Fall wird die Funktion bzw. das Unterprogramm zum Berechnen der zweiten Zeitdauer $t_2$ vor dem Erreichen der Position P5 berechnet und eine Information über die zweite berechnete Zeitdauer $t_2$ beim Erreichen der Position P5 an die Schweißsteuervorrichtung 12 übermitteln, also zum Zeitpunkt, an dem der Laserschweißkopf 7 die Position P5 erreicht, an der die Schweißleistung P rampenförmig abfallen soll. Die Bahnschaltfunktion, die das Unterprogramm zur Berechnung und Weitergabe der zweiten Zeitdauer $t_2$ aufruft, wird insbesondere zeitlich soweit vor dem Erreichen der Position P5 aufgerufen, dass alle Werte beim Erreichen der Position P5 sicher zur Verfügung stehen. Beim Erreichen der Position P5 wird insbesondere durch Setzten eines Ausgang der Schweißsteuervorrichtung 12 durch ein auf der Schweißsteuervorrichtung 12 laufendes Rechnerprogramm die Schweißleistung P rampenförmig verringert. Am Ende des Schweißvorgangs, also wenn die Schweißleistung P sehrt klein bzw. Null ist, wird dieser Ausgang wieder zurückgesetzt. Insbesondere wird die Funktion bzw. das Unterprogramm zum Berechnen der zweiten Zeitdauer $t_2$ dann auf-gerufen, wenn der Laserschweißkopf 7 eine Position P4 erreicht, sodass der Schweißkopf 7 noch eine Strecke S4 zurück legen muss, um die Position P5 zu erreichen, an der die Schweißleistung P rampenförmig reduziert werden soll. Zwischen den Positionen P3 und P4 wird die Strecke S3 zurück gelegt.

Die Berechnung der Rampenparameter, also der beiden Zeitdauern $t_1$, $t_2$, können auch in einem beliebigen, nebenläufigen Prozess ermittelt werden. Dieser Prozess läuft auf der Robotersteuervorrichtung 10. Die erste Zeitdauer $t_1$ wird insbesondere zeitlich soweit vor dem Erreichen der dem Anfang der zu erzeugenden Schweißnaht 21 zugeordneten ersten Position P2 vom nebenläufigen Prozess berechnet und weitergegeben, dass alle Werte zum Zeitpunkt des Erreichens der ersten Position P2 zur Verfügung stehen. Insbesondere wird der nebenläufige Prozess dann gestartet, wenn der Laserschweißkopf 7 die Position P1 erreicht. Beim Erreichen der ersten Position P2 wird insbesondere durch Setzten eines Ausgang der Schweißsteuervorrichtung 12 durch ein auf der Schweißsteuervorrichtung 12 laufendes Rechnerprogramms die Rampe gestartet, also die Schweißleistung P des Laserschweißkopfes 7 rampenförmig erhöht. Beim Erreichen der Soll-Schweißleistung $P_{Soll}$ wird dieser Ausgang wieder zurückgesetzt.

In diesem Fall wird der nebenläufige Prozess zum Berechnen der zweiten Zeitdauer $t_2$ vor dem Erreichen der Position P5 gestartet und eine Information über die berechnete zweite Zeitdauer $t_2$ beim Erreichen der Position P5 an die Schweißsteuervorrichtung 12 übermitteln, also zum Zeitpunkt, an dem der Laserschweißkopf 7 die Position P5 erreicht, an der die Schweißleistung P rampenförmig abfallen soll. Der nebenläufige Prozess wird z.B. dann gestartet, wenn der Laserschweißkopf 7 die Position P4 erreicht.

Es ist auch möglich, dass der rampenförmige Anstieg der Schweißleistung P treppenförmig ausgeführt ist. Auch die rampenförmige Verringerung der Schweißleistung P kann treppenförmig ausgeführt sein. Ist die Taktzeit bzw. Zykluszeit $T_{zykl}$ der als Steuerrechner ausgeführten Robotersteuervorrichtung 10 klein genug, kann der rampenförmige Anstieg der Schweißleistung P treppenförmig ansteigend bzw. abfallend als Soll-Werte von der Robotersteuervorrichtung 10 an die Schweißsteuervorrichtung 12 der Schweißvorrichtung 9 übermittelt werden. In diesem Fall berechnet die Robotersteuervorrichtung 10 insbesondere die entsprechenden Analogdaten in einem neben gelagerten Prozess und schreibt sie auf einen entsprechenden Ausgang der Robotersteuervorrichtung 10, welcher mit der Schweißsteuervorrichtung 12 der Schweißvorrichtung 9 verbunden ist. Insbesondere übergibt die Robotersteuervorrichtung 10 treppenförmig wachsende diskrete Soll-Werte für die Schweißleistungen, welche rampenförmig steigen, bzw. treppenförmig sinkende diskrete Soll-Werte für die Schweißleistung P, welche rampenförmig fallen. Die Rampe ist dann keine Gerade mit einer definierten Steigung, sondern weist eine Treppenfunktion auf. Zumindest zwischen der ersten Position P2 und der zweiten Position P6 wird der Laserschweißkopf 7 mit der konstanten Geschwindigkeit v bewegt. Die erste Zeitdauer $t_1$, innerhalb der der Roboterarm 2 den Laserschweißkopf 7 von der dem Anfang der zu erzeugenden Schweißnaht 21 zugeordneten ersten Position P2 zur Position P3 bewegt, also die Zeitdauer für das rampenförmige Ansteigen der Schweißleistung P, wird wie obenstehend bereits angesprochen, gemäß folgender Formel berechnet:

$$t_1 = S2/v$$

Aus der ersten Zeitdauer $t_1$ und der Zykluszeit $T_{zykl}$ der Robotersteuervorrichtung 10 wird die Anzahl $n$ der einzelnen Stufen, mit der die Soll-Werte der Schweißleistung $P$ innerhalb der ersten Zeitdauer $t_1$ des treppenförmigen Anstiegs der Schweißleistung steigen, folgendermaßen ermittelt:

$$n = t_1/T_{zykl}$$

Somit steigt die die Schweißleistung $P$ zwischen den Positionen P2 und P3 von einer minimalen Schweißleistung $P_{min}$, welche der Laserschweißkopf 7 an der ersten Position P2 erzeugt, bis zur Soll-Schweißleistung $P_{Soll}$ beim Erreichen der Position P3. Die minimale Schweißleistung $P_{min}$ ist vorzugsweise vernachlässigbar klein oder Null.

Jetzt kann die Differenz zwischen den einzelnen Schweißleistungsstufen $P_{step}$ berechnet werden, mit welchen sich die Schweißleistung P rampenförmig erhöhen soll:

$$P_{step} = (P_{Soll} - P_{min})/n$$

Für die fallende rampenförmige Schweißleistung $P$ zwischen den Positionen P5 und P6 werden die für die Schweißsteuervorrichtung 12 vorgegeben treppenförmigen Soll-Werte der Schweißleistung $P$ entsprechend berechnet.

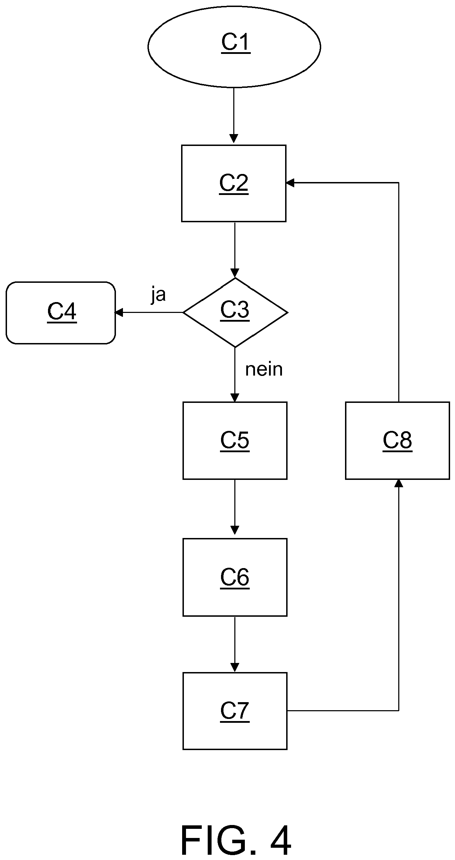

Die Fig. 4 veranschaulicht mittels eines Flussdiagramms das Vorgeben der Soll-Werte für die Schweißleistung $P$ zwischen der ersten Position P2 und der Position P3.

Beim Erreichen der dem Anfang der zu erzeugenden Schweißnaht 21 zugeordneten ersten Position P2 ist die Schweißleistung $P$ des Laserschweißkopfes 7 gleich $P_{min}$, Schritt C1 des Flussdiagramms der Fig. 4.

In einem nachfolgenden Schritt C2 wird überprüft, ob der von der Robotersteuervorrichtung 10 vorgegebene Soll-Wert für die Schweißleistung $P$ größer oder gleich der Soll-Schweißleistung $P_{Soll}$ ist. Dies wird in einem Schritt C3 des Flussdiagramms abgefragt. Ist dies der Fall, dass ist die Soll-Schweißleistung $P_{Soll}$ und somit das Ende des rampenförmigen Anstiegs erreicht, Schritt C4 des Flussdiagramms der Fig. 4.

Ist dagegen der aktuelle Soll-Wert der Schweißleistung P noch kleiner als die Soll-Schweißleistung $P_{Soll}$, dann wartet im Falle des vorliegenden Ausführungsbeispiels die Robotersteuervorrichtung 10 eine Zeitdauer, die gleich der halben Zykluszeit $T_{zykl}$ beträgt, Schritt C5 des Flussdiagramms der Fig. 4.

Nachdem die halbe Zykluszeit $T_{zykl}$ verstrichen ist, wird der aktuelle Soll-Wert für die Schweißleistung $P$ von der Robotersteuervorrichtung 10 an die Schweißsteuervorrichtung 12 übermittelt, Schritt C6 des Flussdiagramms der Fig. 4. Dadurch steuert die Schweißsteuervorrichtung 12 den Laserschweißkopf 7 derart an, dass dieser die aktuelle zu erzeugende Schweißleistung erzeugt. Gegebenenfalls regelt die Schweißsteuervorrichtung 12 den Laserschweißkopf 7 entsprechend.

Danach wartet im Falle des vorliegenden Ausführungsbeispiels die Robotersteuervorrichtung 10 eine Zeitdauer, die gleich der halben Zykluszeit $T_{zykl}$ beträgt, Schritt C7 des Flussdiagramms der Fig. 4, und berechnet danach den nächsten Soll-Wert der Schweißleistung $P$ gemäß folgender Formel, Schritt C8 des Flussdiagramms der Fig. 4

$$\text{Soll-Wert der neuen Schweißleistung}$$
$$= \text{aktueller Soll-Wert der Schweißleistung} + P_{step}$$

Anschließend wird der Soll-Wert der neuen Schweißleistung, welcher nun den aktuelle Soll-Wert der Schweißleistung darstellt, wieder mit der Soll-Schweißleistung $P_{Soll}$ verglichen, Schritt C2, Flussdiagramms der Fig. 4. Die Schritte C2 bis C8 des Flussdiagramms der Fig. 4 werden so lange wiederholt, bis der Soll-Wert aktuellen neuen Schweißleistung größer gleich der Soll-Schweißleistung $P_{Soll}$ ist.

**Patentansprüche**

**1.** Verfahren zum Betreiben einer zum Versehen eines Werkstücks (20) mit einer Schweißnaht (21) vorgesehenen Laserschweißvorrichtung (9), aufweisend folgende Verfahrensschritte:

- automatisches Bewegen einer Vorrichtung (7) zum Erzeugen eines zum Schweißen vorgesehenen Laserstrahls (11) der Laserschweißvorrichtung (9) mittels einer mechanischen Vorrichtung (2), welche durch eine Steuervorrichtung (10) angesteuert wird, an eine erste Position (P2), die dem Anfang der zu erzeugenden Schweißnaht (21) zugeordnet ist, um das Schweißen der Schweißnaht (21) zu beginnen,

- während des Schweißens der Schweißnaht (21), automatisches Bewegen der Vorrichtung (7) zum Erzeugen eines zum Schweißen vorgesehenen Laserstrahls (11) mittels der mechanischen Vorrichtung (2) von der ersten Position (P2) zu einer zweiten Position (P6), die dem Ende der zu erzeugenden Schweißnaht (21) zugeordnet ist, mit einer konstanten, aktuellen Geschwindigkeit v, welche die Vorrichtung (7) zum Erzeugen eines zum Schweißen vorgesehenen Laserstrahls (11) beim Erreichen der ersten Position (P2) aufweist,

- aufgrund der konstanten, aktuellen Geschwindigkeit v und einer Länge einer vorgegebenen ersten Strecke (S2), die von der ersten Position (P2) beginnt, Berechnen einer ersten Zeitdauer $t_1$, innerhalb der die Vorrichtung (7) zum Erzeugen eines zum Schweißen vorgesehenen Laserstrahls (11) entlang der ersten Strecke (S2) bewegt wird, und

- beginnend von der ersten Position (P2), zeitgesteuertes rampenförmiges Erhöhen einer von der Vorrichtung (7) zum Erzeugen eines zum Schweißen vorgesehenen Laserstrahls (11) zu erzeugenden Schweißleistung P, sodass diese am Ende der ersten Zeitdauer $t_1$ eine vorgegebene oder vorgebbare Soll-Schweißleistung $P_{Soll}$ für das Schweißen der Schweißnaht (21) aufweist.

2. Verfahren nach Anspruch 1, aufweisend Berechnen der ersten Zeitdauer $t_1$ mittels der Steuervorrichtung (10) und Übergeben einer Information über die erste Zeitdauer $t_1$ an eine Schweißsteuervorrichtung (10) der Laserschweißvorrichtung (9) zu dem Zeitpunkt, an dem die Vorrichtung (7) zum Erzeugen eines zum Schweißen vorgesehenen Laserstrahls (11) die erste Position (P2) erreicht, so dass diese die Vorrichtung (7) zum Erzeugen eines zum Schweißen vorgesehenen Laserstrahls (11) basierend auf der erste Zeitdauer $t_1$ zeitgesteuert anzusteuern vermag.

3. Verfahren nach Anspruch 2, aufweisend Berechnen der ersten Zeitdauer $t_1$, wenn die Vorrichtung (7) zum Erzeugen eines zum Schweißen vorgesehenen Laserstrahls (11) die erste Position (P2) erreicht.

4. Verfahren nach Anspruch 2, aufweisend Berechnen der ersten Zeitdauer $t_1$ bevor die Vorrichtung (7) zum Erzeugen eines zum Schweißen vorgesehenen Laserstrahls (11) die erste Position (P2) erreicht.

5. Verfahren nach Anspruch 2, bei dem der Schritt des zeitgesteuerten rampenförmigen Erhöhens der von der Vorrichtung (7) zum Erzeugen eines zum Schweißen vorgesehenen Laserstrahls (11) zu erzeugenden Schweißleistung P durch treppenförmiges Erhöhen von Soll-Werten für die Schweißleistung P während der ersten Zeitdauer $t_1$ erfolgt, insbesondere gemäß folgender Verfahrensschritte:

- Ermitteln aus der ersten Zeitdauer $t_1$ und einer Zykluszeit $T_{zykl}$ der Steuervorrichtung (10) einer Anzahl n von einzelnen Stufen, mit der die Soll-Werte der Schweißleistung P innerhalb der ersten Zeitdauer $t_1$ des treppenförmigen Erhöhens der Schweißleistung steigen, insbesondere gemäß folgender Gleichung:

$$n = t_1/T_{zykl}$$

- Berechnen einer Differenzleistung $P_{step}$ gemäß folgender Gleichung

$$P_{step} = (P_{Soll} - P_{min})/n$$

wobei $P_{min}$ die Schweißleistung an der ersten Position (P2) ist, und
- treppenförmiges Erhöhen der Soll-Werte für die Schweißleistung um die Differenzleistung $P_{step}$.

6. Verfahren nach einem der Ansprüche 1 bis 5, zusätzlich aufweisend folgende Verfahrensschritte:

- aufgrund der konstanten, aktuellen Geschwindigkeit v und einer Länge einer vorgegebenen zweiten Strecke (S5), die vor der zweiten Position (P6) beginnt und dort endet, Berechnen einer zweiten Zeitdauer $t_2$, innerhalb der die Vorrichtung (7) zum Erzeugen eines zum Schweißen vorgesehenen Laserstrahls (11) entlang der zweiten Strecke (S5) bewegt wird, und

- wenn die Vorrichtung (7) zum Erzeugen eines zum Schweißen vorgesehenen Laserstrahls (11) eine dritte Position (P5) erreicht, die dem Anfang der zweiten Strecke (S5) zugeordnet ist, zeitgesteuertes rampenförmiges Verringern der von der Vorrichtung (7) zum Erzeugen eines zum Schweißen vorgesehenen Laserstrahls (11) zu erzeugenden Schweißleistung $P$, sodass diese am Ende der zweiten Zeitdauer $t_2$ eine Schweißleistung $P_{min,2}$ aufweist, welche wesentlich geringer als die Soll-Schweißleistung $P_{Soll}$ ist.

7. Verfahren nach Anspruch 6, aufweisend Berechnen der zweiten Zeitdauer $t_2$ mittels der Steuervorrichtung (10) und Übergeben einer Information über die zweite Zeitdauer $t_2$ an die Schweißsteuervorrichtung (12), wenn die Vorrichtung (7) zum Erzeugen eines zum Schweißen vorgesehenen Laserstrahls (11) die dritte Position (P5) erreicht, so dass diese die Vorrichtung (7) zum Erzeugen eines zum Schweißen vorgesehenen Laserstrahls (11) basierend auf der zweiten Zeitdauer $t_2$ zeitgesteuert anzusteuern vermag.

8. Verfahren nach Anspruch 6, aufweisend Berechnen der zweiten Zeitdauer $t_2$, wenn die Vorrichtung (7) zum Erzeugen eines zum Schweißen vorgesehenen Laserstrahls (11) die dritte Position (P5) erreicht.

9. Verfahren nach Anspruch 6, aufweisend Berechnen der zweiten Zeitdauer $t_2$ bevor die Vorrichtung (7) zum Erzeugen eines zum Schweißen vorgesehenen Laserstrahls (11) die dritte Position (P5) erreicht.

10. Verfahren nach Anspruch 6, bei dem der Schritt des zeitgesteuerten rampenförmigen Verringerns der von der Vorrichtung (7) zum Erzeugen eines zum Schweißen vorgesehenen Laserstrahls (11) zu erzeugenden Schweißleistung $P$ durch treppenförmiges Verringern von Soll-Werten für die Schweißleistung $P$ während der zweiten Zeitdauer $t_2$ erfolgt, insbesondere gemäß folgender Verfahrensschritte:

- Ermitteln aus der zweiten Zeitdauer $t_2$ und einer Zykluszeit $T_{zykl}$ der Steuervorrichtung (10) einer Anzahl $m$ von einzelnen Stufen, mit der die Soll-Werte der Schweißleistung $P$ innerhalb der zweiten Zeitdauer $t_2$ des treppenförmigen Verringerns der Schweißleistung verringert werden soll, insbesondere gemäß folgender Gleichung:

$$m = t_2/T_{zykl}$$

- Berechnen einer weiteren Differenzleistung $P_{step,2}$ gemäß folgender Gleichung

$$P_{step,2} = (P_{Soll} - P_{min,2})/m$$

wobei $P_{min,2}$ die Schweißleistung an der zweiten Position (P6) ist, und
- treppenförmiges Verringern der Soll-Werte für die Schweißleistung um die weitere Differenzleistung $P_{step,2}$.

11. Verfahren nach einem der Ansprüche 1 bis 10, bei dem die mechanische Vorrichtung als ein Roboterarm (2) eines Industrieroboters (1) und die Steuervorrichtung als eine Robotersteuervorrichtung (10) zum Ansteuern des Roboterarms (2) ausgebildet ist.

12. Schweißroboter zum Durchführen des Verfahrens nach Anspruch 11, aufweisend

- einen Industrieroboter (1), der einen Roboterarm (2) und eine zum Ansteuern des Roboterarms (2) vorgesehene Robotersteuervorrichtung (10) umfasst, und
- eine Laserschweißvorrichtung (9), die eine Vorrichtung (7) zum Erzeugen eines zum Schweißen vorgesehenen Laserstrahls (11) und eine zum Durchführen des Verfahrens nach Anspruch 11 eingerichtete Schweißsteuervorrichtung (12) zum Ansteuern der Vorrichtung (7) zum Erzeugen eines zum Schweißen vorgesehenen Laserstrahls (11) umfasst.

**Claims**

1. Method for operating a laser welding device (9) for providing a workpiece (20) with a welded seam (21), comprising the following method steps:

- automatically moving a device (7) for producing a laser beam (11) of the laser welding device (9) provided for welding by means of a mechanical device (2), which is controlled by a control device (10), to a first position (P2), which is assigned to the beginning of the welded seam (21) to be produced, in order to begin the welding of the welded seam (21),

- during the welding of the welded seam (21), automatically moving the device (7) for producing a laser beam (11) provided for welding by means of the mechanical device (2) from the first position (P2) to a second position (P6), which is assigned to the end of the welded seam (21) to be produced, at a constant, current speed $v$ which the device (7) for producing a laser beam (11) provided for welding has when reaching the first position (P2),

- on the basis of the constant, current speed $v$ and a length of a predefined first section (S2), which begins from the first position (P2), calculating a first time period $t_1$ within which the device (7) for producing a laser beam (11) provided for welding is moved along the first section (S2), and

- beginning from the first position (P2), a time-controlled ramp-like increase of a welding capacity P to be produced by the device (7) for producing a laser beam (11) provided for welding, so that the latter at the end of the first time period $t_1$ has a predefined or predefinable reference welding capacity $P_{Ref}$ for welding the welded seam (21).

2. Method according to claim 1, comprising calculating the first time period $t_1$ by means of the control device (10) and transferring information about the first time period $t_1$ to a welding control device (10) of the laser welding device (9) at the time point, at which the device (7) for producing a laser beam (11) provided for welding reaches the first position (P2), so that the latter can control the device (7) for producing a laser beam (11) provided for welding based on the first time period $t_1$ in a time-controlled manner.

3. Method according to claim 2, comprising calculating the first time period $t_1$ when the device (7) for producing a laser beam (11) provided for welding reaches the first position (P2).

4. Method according to claim 2, comprising calculating the first time period $t_1$ before the device (7) for producing a laser beam (11) provided for welding reaches the first position (P2).

5. Method according to claim 2, in which the step of time-controlled ramp-like increase of the welding capacity P to be produced by the device (7) for producing a laser beam (11) for welding is performed by a step-like increase of reference values for the welding capacity P during the first time period $t_1$, in particular according to the following method steps:

- determining from the first time period $t_1$ and a cycle time $T_{cycl}$ of the control device (10) a number $n$ of individual steps, by which the reference values of the welding capacity $P$ increase within the first time period $t_1$ of the step-like increase of the welding capacity, in particular according to the following equation:

$$n = t_1/T_{cycl}$$

- calculating a differential output $P_{step}$ according to the following equation

$$P_{step} = (P_{Ref} - P_{min}) /n$$

wherein $P_{min}$ is the welding capacity at the first position (P2) and
- increasing step-like the reference values for the welding capacity by the differential output $P_{step}$.

6. Method according to any of claims 1 to 6, additionally comprising the following method steps:

- on the basis of the constant current speed $v$ and a length of a predefined second section (S5), which begins before the second position (P6) and ends there, calculating a second time period $t_2$, within which the device (7) is moved for producing a laser beam (11) provided for welding along the second section (S5), and
- when the device (7) for producing a laser beam (11) provided for welding reaches a third position (P5), which is assigned to the beginning of the second section (S5), a time-controlled ramp-like reduction of the welding capacity $P$ to be produced by the device (7) for producing a laser beam (11) provided for welding, so that the latter at the end of the second time period $t_2$ has a welding capacity $P_{min,2}$, which is considerably lower than the reference welding capacity $P_{Ref}$.

7. Method according to claim 6, comprising calculating the second time period $t_2$ by means of the control device (10) and transferring information about the second time period $t_2$ to the welding control device (12), when the device (7) for producing a laser beam (11) provided for welding reaches the third position (P5), so that the latter can control the device (7) for producing a laser beam (11) provided for welding in a time-controlled manner on the basis of the second time period $t_2$.

8. Method according to claim 6, comprising calculating the second time period $t_2$, when the device (7) for producing a laser beam (11) provided for welding reaches the third position (P5).

9. Method according to claim 6, comprising calculating the second time period $t_2$ before the device (7) for producing a laser beam (11) provided for welding reaches the third position (P5).

10. Method according to claim 6, in which the step of the time-controlled ramp-like reduction of the welding capacity P to be produced by the device (7) for producing a laser beam (11) provided for welding is performed by the step-like reduction of reference values for the welding capacity P during the second time period $t_1$, in particular according to the following method steps:

- determining from the second time period $t_2$ and a cycle time $T_{cycl}$ of the control device (10) a number $m$ of individual steps, by which the reference values of the welding capacity $P$ are to be reduced within the second time period $t_2$ of the step-like reduction of the welding capacity, in particular according to the following equation:

$$m = t_2/T_{cycl}$$

- calculating a further differential output $P_{step,2}$ according to the following equation

$$P_{step,2} = (P_{Ref} - P_{min,2})/m$$

 wherein $P_{min,2}$ is the welding capacity at the second position (P6), and
- step-like reduction of the reference values for the welding capacity by the additional differential output $P_{step,2}$.

11. Method according to any of claims 1 to 10, in which the mechanical device is designed as a robot arm (2) of an industrial robot (1) and the control device is designed as a robot control device (10) for controlling the robot arm (2).

12. Welding robot for performing the method according to claim 11, having

- an industrial robot (1), which comprises a robot arm (2) and a robot control device (10) provided for controlling the robot arm (2) and
- a laser welding device (9), which comprises a device (7) for producing a laser beam (11) provided for welding and a welding control device (12) for configured for performing the method according to claim 11 for controlling the device (7) for producing a laser beam (11) provided for welding.


**Revendications**

1. Procédé pour faire fonctionner un dispositif de soudage au laser (9) prévu pour munir une pièce (20) d'un cordon de soudure (21), présentant les étapes de procédé suivantes :

- déplacement automatique d'un dispositif (7) destiné à générer un faisceau laser (11), prévu pour le soudage, du dispositif de soudage laser (9) au moyen d'un dispositif mécanique (2) qui est piloté par un dispositif de commande (10), jusqu'à une première position (P2) qui est associée au début du cordon de soudure (21) à générer, afin de commencer le soudage du cordon de soudure (21),
- pendant le soudage du cordon de soudure (21), déplacement automatique du dispositif (7) destiné à générer un faisceau laser (11) prévu pour le soudage au moyen du dispositif mécanique (2) depuis la première position (P2) vers une deuxième position (P6) qui est associée à l'extrémité finale du cordon de soudure (21) à générer, avec une vitesse v actuelle constante que le dispositif (7) destiné à générer un faisceau laser (11) prévu pour le soudage présente lorsque la première position (P 2) est atteinte,

- sur la base de la vitesse v actuelle constante et d'une longueur d'un premier trajet prédéterminé (S2), qui part de la première position (P2), calcul d'une première période de temps $t_1$ pendant laquelle le dispositif (7) destiné à générer un faisceau laser (11) prévu pour le soudage est déplacé le long du premier trajet (S2), et

- à partir de la première position (P2), augmentation en forme de rampe et de manière contrôlée dans le temps, d'une puissance de soudage P qui doit être générée par le dispositif (7) destiné à générer un faisceau laser (11) prévu pour le soudage, de telle sorte qu'à la fin de la première période de temps $t_1$, celle-ci présente une puissance de soudage de consigne $P_{soll}$ prédéterminée ou pouvant être prédéterminée pour le soudage du cordon de soudure (21).

2. Procédé selon la revendication 1, comprenant le calcul de la première période de temps $t_1$ au moyen du dispositif de commande (10) et la transmission d'une information concernant la première période de temps $t_1$ à un dispositif de commande de soudage (10) du dispositif de soudage au laser (9) au moment où le dispositif (7) destiné à générer un faisceau laser (11) prévu pour le soudage atteint la première position (P2), de telle sorte que celui-ci est capable de piloter le dispositif (7) destiné à générer un faisceau laser (11) prévu pour le soudage, d'une manière commandée dans le temps sur la base de la première période de temps $t_1$.

3. Procédé selon la revendication 2, comprenant le calcul de la première période de temps $t_1$ lorsque le dispositif (7) destiné à générer un faisceau laser (11) prévu pour le soudage atteint la première position (P 2).

4. Procédé selon la revendication 2, comprenant le calcul de la première période de temps $t_1$ avant que le dispositif (7) destiné à générer un faisceau laser (11) prévu pour le soudage n'atteigne la première position (P2).

5. Procédé selon la revendication 2, dans lequel l'étape de l'augmentation en forme de rampe, commandée dans le temps, de la puissance de soudage P devant être générée par le dispositif (7) destiné à générer un faisceau laser (11) prévu pour le soudage est effectuée par une augmentation en forme de gradins des valeurs de consigne de la puissance de soudage P pendant la première période de temps $t_1$, en particulier selon les étapes de procédé suivantes :

- détermination, à partir de la première période $t_1$ et d'un temps de cycle $T_{zykl}$ du dispositif de commande (10), d'un nombre n d'étapes individuelles avec lequel les valeurs de consigne de la puissance de soudage P augmentent au cours de la première période $t_1$ de l'augmentation en gradins de la puissance de soudage, en particulier selon l'équation suivante :

$$n = t_1/T_{zykl}$$

- calcul d'une puissance différentielle $P_{step}$ selon l'équation suivante

$$P_{step} = (P_{soll} - P_{min}) / n$$

la puissance de soudage étant sur la première position (P2), et
- augmentation progressive des valeurs de consigne, pour la puissance de soudage, de la puissance différentielle $P_{step}$.

6. Procédé selon l'une quelconque des revendications 1 à 6, comprenant en outre les étapes suivantes :

- sur la base de la vitesse v actuelle constante et d'une longueur d'un deuxième trajet (S5) prédéterminé, qui commence avant la deuxième position (P6) et se termine là, calcul d'une deuxième période de temps $t_2$, pendant laquelle le dispositif (7) destiné à générer un faisceau laser (11) prévu pour le soudage est déplacé le long du deuxième trajet (S5), et

- lorsque le dispositif (7) destiné à générer un faisceau laser (11) prévu pour le soudage atteint une troisième position (P5), qui est associée au début du deuxième trajet (S5), réduction en forme de rampe et de manière contrôlée dans le temps, de la puissance de soudage P devant être générée par le dispositif (7) destiné à générer un faisceau laser (11) prévu pour le soudage, de telle sorte qu'à la fin de la deuxième période de temps $t_2$, celle-ci présente une puissance de soudage qui est sensiblement inférieure à la puissance de soudage souhaitée $P_{soll}$.

7. Procédé selon la revendication 6, comprenant le calcul de la deuxième période de temps $t_2$ au moyen du dispositif de commande (10) et la transmission d'une information concernant la deuxième période de temps $t_2$ au dispositif de commande de soudage (12) lorsque le dispositif (7) destiné à générer un faisceau laser (11) prévu pour le soudage atteint la troisième position (P5), de telle sorte que celui-ci est capable de piloter le dispositif (7) pour destiné à générer un faisceau laser (11) prévu pour le soudage, d'une manière commandée dans le temps sur la base de la deuxième période de temps $t_2$.

8. Procédé selon la revendication 6, comprenant le calcul de la deuxième période de temps $t_2$ lorsque le dispositif (7) destiné à générer un faisceau laser (11) prévu pour le soudage atteint la troisième position (P5),

9. Procédé selon la revendication 6, comprenant le calcul de la deuxième période de temps $t_2$ avant que le dispositif (7) destiné à générer un faisceau laser (11) prévu pour le soudage n'atteigne la troisième position (P5).

10. Procédé selon la revendication 6, dans lequel l'étape de la réduction en forme de rampe et commandée dans le temps, de la puissance de soudage $P$ qui doit être générée par le dispositif (7) destiné à générer un faisceau laser (11) prévu pour le soudage est effectuée par une réduction en forme de gradins de valeurs de consigne pour la puissance de soudage $P$ pendant la deuxième période de temps $t_2$, en particulier selon les étapes de procédé suivantes :

   - détermination, à partir de la deuxième période de temps $t_2$ et d'un temps de cycle $T^{zykl}$ du dispositif de commande (10), d'un nombre m d'étapes individuelles avec lequel les valeurs de consigne de la puissance de soudage $P$ doivent être réduites pendant deuxième période de temps $t_2$ de la réduction en forme de gradins de la puissance de soudage, en particulier selon l'équation suivante :

$$m = t_2/T_{zykl}$$

   - calcul d'une puissance différentielle supplémentaire $P_{step,2}$ selon l'équation suivante

$$P_{step,2} = P_{soll} - P_{min,2}) / m,$$

   $P_{min,2}$ étant la puissance de soudage sur la deuxième position (P6), et
   - réduction progressive des valeurs de consigne pour la puissance de soudage, de la puissance différentielle supplémentaire $P_{step,2}$.

11. Procédé selon l'une quelconque des revendications 1 à 10, dans lequel le dispositif mécanique est réalisé sous forme d'un bras de robot (2) d'un robot industriel (1) et le dispositif de commande est réalisé sous forme d'un dispositif de commande de robot (10) pour piloter le bras de robot (2).

12. Robot de soudage pour mettre en œuvre le procédé selon la revendication 11, comprenant

   - un robot industriel (1) qui comprend un bras de robot (2) et un dispositif de commande de robot (10 pour piloter le bras de robot (2), et
   - un dispositif de soudage au laser (9) qui comprend un dispositif (7) destiné à générer un faisceau laser (11) prévu pour le soudage et un dispositif de commande de soudage (12) adapté pour mettre en œuvre le procédé selon la revendication 11 pour piloter le dispositif (7) destiné à générer un faisceau laser (11) prévu pour le soudage.

# FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10344526 A1
- JP 2011206821 A

- WO 2004004958 A2
- WO 2007036797 A1